# EUROPEAN PATENT APPLICATION

(11) **EP 2 492 450 A2**
(43) Date of publication of application: **29.08.2012**
(21) Application number: 12156097.3
(22) Date of filing: 17.02.2012
(51) Int. Cl.: F01D 11/08, B23K 20/08, B23P 15/00

(54) **Process of forming an explosion-welded gas turbine shroud segment**

(30) Priority: 22.02.2011 US 201113031925
(71) Applicant: General Electric Company, Schenectady, NY 12345 (US)
(72) Inventor: Nowak, Daniel, Houston, TX Texas 77086 (US); Goller, George, Greenville, SC South Carolina 29615 (US); Kottilingam, Srikanth, Greenville, SC South Carolina 29615 (US); Myers, Melbourne, Greenville, SC South Carolina 29615 (US); Johnston, Bill Damon, Greenville, SC South Carolina 29615 (US)
(74) Representative: Szary, Anne Catherine

(57) **Abstract**

An explosion-welded turbine shroud (100) and a process of forming an explosion-welded gas turbine shroud are disclosed. The explosion-welded gas turbine shroud (100) includes a first alloy (102) explosion welded to a second alloy (106). In the explosion-welded gas turbine shroud (100), the first alloy (102) forms at least a portion of a hot gas path (101) or an expansion region (105) of the gas turbine shroud (100) includes the first alloy (102). The process includes explosion welding a first alloy (102) to a second alloy (106) to form the gas turbine shroud (100).

## Description

### FIELD OF THE INVENTION

The present invention is directed to manufactured components and processes of forming manufactured components. More specifically, the present invention relates to explosion-welded components and explosion welding processes.

### BACKGROUND OF THE INVENTION

The operating temperature within a gas turbine is both thermally and chemically hostile. Significant advances in high temperature capabilities have been achieved through the development of iron, nickel, and cobalt-based superalloys and the use of environmental coatings capable of protecting superalloys from oxidation, hot corrosion, etc., but coating systems continue to be developed to improve the performance of the materials.

In the compressor portion of a gas turbine, atmospheric air is compressed to 10-25 times atmospheric pressure, and adiabatically heated to 800° F - 1250° F (427° C - 677° C) in the process. This heated and compressed air is directed into a combustor, where it is mixed with fuel. The fuel is ignited, and the combustion process heats the gases to very high temperatures, in excess of 3000° F (1650° C). These hot gases pass through the turbine, where airfoils fixed to rotating turbine disks extract energy to drive an attached generator which produces electrical power. To improve the efficiency of operation of the turbine, combustion temperatures have been raised. Of course, as the combustion temperature is raised, steps must be taken to prevent thermal degradation of the materials forming the flow path for these hot gases of combustion.

Certain known alloys are used for components disposed along the flow path of these hot gases. Certain portions of these components must be able to withstand temperatures higher than other portions of these components. For example, certain portions may be resistant to temperatures for adiabatic heating (for example, 800° F - 1250° F) and other portions may be further resistant to hot gases heated by the combustion processes (for example, in excess of 3000° F). Components made entirely of alloys resistant to the highest temperature may be undesirable by being overly expensive or failing to include other properties desirable in other portions of the components. Alternatively, components made entirely of alloys resistant only to the temperature of the lower temperature portions may fail.

Generally, gas turbine shrouds are manufactured from one or more rings or cylinders. As such, manufacturing and tooling facilities are configured for manufacturing gas turbine shrouds from one or more rings or cylinders. Welding of multiple materials to form gas turbine shrouds may include techniques such as weld build-up, strip cladding, brazing, or solid state bonding. These techniques suffer from a drawback that they may be limited based upon properties of the materials (for example, crystal structures, compositions, or other suitable properties).

Explosion welding is a bonding technique that generally includes welding planar materials by an explosive force and results in a microstructure differing from other weld techniques. Explosion welding permits metals to be bonded that are otherwise generally incompatible. However, explosion welding processes have been limited to simple shapes and geometries. Therefore, current explosion welding techniques have been unable to bond structures in gas turbine shrouds.

An explosion-welded turbine shroud, an explosion-welded component, and an explosion-welding process that do not suffer from one or more of the above drawbacks would be desirable in the art.

### BRIEF DESCRIPTION OF THE INVENTION

According to an exemplary embodiment, a gas turbine shroud includes a first alloy explosion welded to a second alloy. The first alloy forms at least a portion of a hot gas path of the gas turbine shroud.

According to another exemplary embodiment, a gas turbine shroud includes an expansion region and a first alloy explosion welded to a second alloy. The expansion region of the gas turbine shroud includes the first alloy.

According to another exemplary embodiment, a process of forming an explosion-welded gas turbine shroud includes explosion welding a first alloy to a second alloy. The first alloy forms at least a portion of a hot gas path of the gas turbine shroud.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 shows a perspective view of an exemplary explosion-welded gas turbine shroud according to an embodiment of the disclosure.
FIG. 2 shows an enlarged portion of an exemplary explosion-welded gas turbine shroud as shown in FIG. 1.
FIG. 3 shows a perspective view of an exemplary explosion-welded gas turbine shroud preform according to an embodiment of the disclosure.
FIG. 4 shows a perspective view of an exemplary explosion-welded gas turbine shroud preform according to an embodiment of the disclosure.

Wherever possible, the same reference numbers will be used throughout the drawings to represent the same parts.

### DETAILED DESCRIPTION OF THE INVENTION

Provided is an explosion-welded gas turbine shroud, a non-planar explosion-welded component, and a process of forming a non-planar explosion-welded component. Embodiments of the present disclosure permit components to be used in thermally and chemically hostile environments, permit components to be resistant to oxidation and/or hot corrosion, permit the overall material cost of components to be reduced in comparison to single alloy components, permit different portions of components to have different properties (for example, heat resistant properties), permit non-planar components to have properties available through explosion welding, permit materials having otherwise incompatible properties to be bonded (for example, otherwise incompatible crystal structures and/or compositions), and combinations thereof.

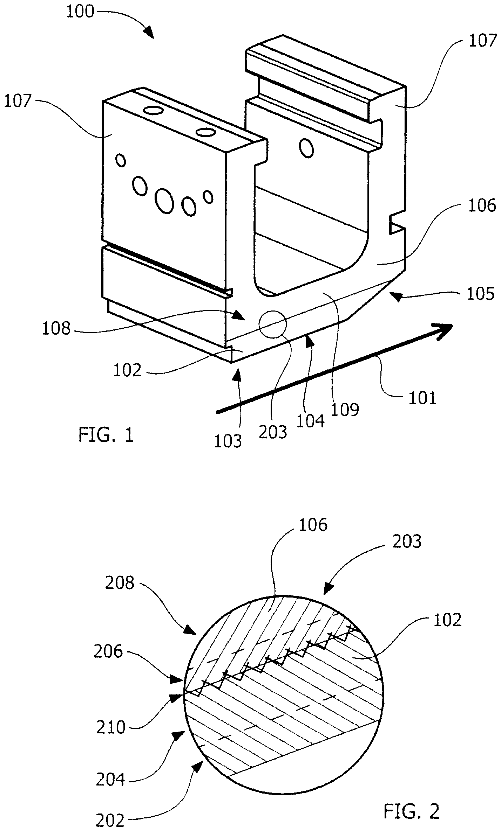

FIG. 1 shows a non-planar explosion-welded component. Specifically, FIG. 1 shows an explosion-welded gas turbine shroud 100. The shroud 100 is for use in a gas turbine and is capable of being arranged circumferentially and concentric with a rotor (not shown) on which turbine blades (not shown) are mounted. The shroud 100 includes ribs 107 extending from a substantially planar member 109. In one embodiment, the ribs 107 and the substantially planar member 109 include the same material. In another embodiment, the ribs 107 include material different from the substantially planar member 109.

The shroud 100 includes a first alloy 102 and a second alloy 106. The first alloy 102 is positioned along the substantially planar member 109 as a cladding layer 104 and the second alloy 106 forms the substantially planar member 109 and is a backing layer 108. The cladding layer 104 is resistant to heat above a first temperature (for example, about 1000° F, about 1250° F, about 1500° F, about 2000° F, or about 3000° F). The backing layer 108 is resistant to heat above a second temperature (for example, between 800° F and 1250° F, about 800° F, about 1000° F, about 1250° F, about 1500° F, or about 2000° F). In one embodiment, the first temperature is substantially higher than the second temperature. In a further embodiment, the second alloy 106 is unsuitable for being exposed to the first temperature.

The first alloy 102 is an austenitic alloy, such as austenitic stainless steel or austenitic manganese steel. The first alloy 102 is any suitable cladding material. Suitable cladding materials include, but are not limited to, stainless steel alloys, aluminum alloys, tantalum alloys, nickel alloys, copper alloys, titanium alloys, zirconium alloys, and combinations thereof. In one embodiment, the second alloy 106 is an austenitic alloy. In one embodiment, the second alloy 106 is a ferritic alloy such as ferritic stainless steel. The second alloy 106 is any suitable backing material. Suitable backing materials include, but are not limited to, carbon steel, chromium-molybdenum alloy steel, forgings, stainless steel, or combinations thereof.

Referring to FIG. 2, explosion welding of the first alloy 102 to the second alloy 106 forms a microstructure having a gradient 203 between the first alloy 102 and the second alloy 106 as shown in enlarged region 200 corresponding to FIG. 1. For example, in one embodiment with the first alloy 102 being austenitic and the second alloy 106 being ferritic, the first alloy 102 includes a large grain region 202 distal from the second alloy 106 and a fine grain region 204 proximal to the second alloy 106. In this embodiment, the second alloy 106 includes an amorphous region 206 proximal to the first alloy 102 and a high dislocation density region 208 distal from the first alloy 102. The explosion welding of the first alloy 102 to the second alloy 106 forms the gradient 203 with a transition region 210 between the first alloy 102 and the second alloy 106 thereby providing additional strength of the weld. As will be appreciated, in other embodiments, the first alloy 102, the second alloy 106, and additional alloys (if present) are austenitic or ferritic based upon desired properties.

Referring again to FIG. 1, the shroud 100 includes any other suitable features such as cooling passages, notches, chambers, mounting features, or other suitable features. During operation, hot gas flows along a path 101 abutting the cladding layer 104. The temperature of the gas within a first region 103 abutting the path 101 is higher than the temperature of the gas within an expansion region 105 abutting the path 101. The expansion region 105 is identifiable by including an angled, arced, or otherwise expanded region formed along the path 101 of the gas.

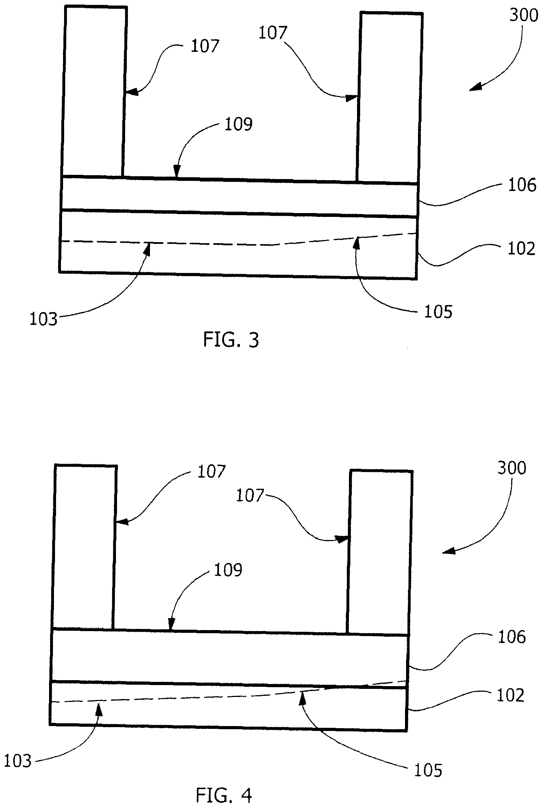

FIGS. 3-4 show preforms 300 for forming the shroud 100. The preform 300 is formed by explosion welding the first alloy 102 to the second alloy 106. In the embodiment shown in FIG. 3, the preform 300 forms an embodiment of the shroud 100 with the first region 103 and the expansion region 105 including the first alloy 102. In the embodiment shown in FIG. 4, the preform 300 forms an embodiment of the shroud 100 with the expansion region 105 further including the second alloy 106.

In one embodiment of the process, the forming of the shroud 100 or any other suitable component includes positioning a first portion of the shroud 100 and positioning a second portion of the shroud 100. The first portion includes the first alloy 102 (for example, the cladding layer 104) and the second portion includes the second alloy 106 (for example, the substantially planar member 109 or the backing layer 108). The first portion and the second portion are explosion welded together to form the preform 300. The preform 300 is then machined, deformed, further welded, or otherwise processed to remove excess material 302 and form the desired features of the shroud 100. In an alternative embodiment where the preform 300 does not include the ribs 107, the ribs 107 are formed on the preform 300 after the explosion welding by removing material through machining or by bonding the ribs 107 to the substantially planar member 109.

The explosion welding of the first alloy 102 to the second alloy 106 is by ignition or initiation of detonation to direct the first alloy 102 with explosive force to contact the second alloy 106. The explosion welding is continued until a desired portion of the first alloy 102 is explosion welded to the second alloy 106. The explosion welding is performed along any suitable path. Suitable paths include, but are not limited to, a helical path for a cylindrical component (or preform), a series of paths, an S-shaped path, or combinations thereof. In embodiments including a series of paths, multiple coordinated ignitions or initiations of detonations coordinate the explosive welding (for example, concurrent, sequential, or otherwise controlled detonations).

During the explosion welding process, the ignitions or detonations are performed at predetermined conditions. In one embodiment, parameters include a predetermined pressure (for example, between about 1 GPa and about 10 GPa, about 5 GPa, or about 10 GPa), a predetermined detonation rate (for example, between about 1500 m/s and 4000 m/s, between about 1500 m/s and about 2000 m/s, between about 3500 m/s and about 4000 m/s, at about 1500 m/s, at about 2000 m/s, at about 3500 m/s, or at about 4000 m/s), a predetermined impact angle (for example, between about 3° and about 30°, between about 3° and about 5°, between about 25° and about 30°, at about 3°, at about 5°, at about 25°, or at about 30°), a predetermined collision velocity (for example, between about 225 m/s and about 550 m/s, between about 225 m/s and about 250 m/s, between about 500 m/s and about 550 m/s, at about 225 m/s, at about 250 m/s, at about 500 m/s, or at about 550 m/s), or combinations thereof.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A gas turbine shroud, comprising:
a first alloy explosion welded to a second alloy;
wherein the first alloy forms at least a portion of a hot gas path of the gas turbine shroud.

2. The gas turbine shroud of claim 1, wherein the first alloy is an austenitic alloy.

3. The gas turbine shroud of claim 2, wherein the second alloy is an austenitic alloy.

4. The gas turbine shroud of claim 2, wherein the second alloy is a ferritic alloy.

5. The gas turbine shroud of any preceding claim, wherein the first alloy is resistant to heat above a first temperature and the second alloy is resistant to heat above a second temperature.

6. The gas turbine shroud of claim 5, wherein the first temperature is greater than the second temperature.

7. The gas turbine shroud of claim 5 or claim 6, wherein the first temperature is above about 3000° F.

8. The gas turbine shroud of any one of claims 5 to 7, wherein the second temperature is between about 800° F and 1250° F.

9. The gas turbine shroud of any preceding claim, further comprising an expansion region positioned along the hot gas path.

10. The gas turbine shroud of claim 9, wherein the expansion region includes the first alloy and the second alloy.

11. The gas turbine shroud of claim 9, wherein the expansion region consists of the first alloy.

12. The gas turbine shroud of any preceding claim, wherein the first alloy decreases in thickness along the hot gas path.

13. A gas turbine shroud, comprising:
an expansion region; and
a first alloy explosion welded to a second alloy;
wherein the expansion region of the gas turbine shroud includes the first alloy.

14. The gas turbine shroud of claim 13, wherein the expansion region further includes the second alloy.

15. The gas turbine shroud of claim 13, wherein the expansion region consists of the first alloy.

16. The gas turbine shroud of any one of claims 13 to 15, wherein the expansion region is positioned along a hot gas path and the first alloy decreases in thickness along the hot gas path.

17. A process of forming an explosion-welded gas turbine shroud, comprising:
explosion welding a first alloy to a second alloy;
wherein the first alloy forms at least a portion of a hot gas path of the gas turbine shroud.

18. The process of claim 17, wherein the explosion welding of the first alloy to the second alloy forms a preform.

19. The process of claim 18, further comprising removing material from the preform.

20. The process of any one of claims 17 to 19, wherein the explosion welding includes multiple concurrent detonations.
